# EUROPEAN PATENT SPECIFICATION

(11) **EP 2 980 465 B1**
(45) Date of publication and mention of the grant of the patent: **02.10.2019**
(21) Application number: 15158690.6
(22) Date of filing: 11.03.2015
(51) Int. Cl.: F16L 5/02, F16L 5/04

(54) **A COMPENSATOR AND METHOD FOR USE THEREOF**
KOMPENSATOR UND VERFAHREN ZUR VERWENDUNG DAVON
COMPENSATEUR ET PROCÉDÉ POUR SON UTILISATION

(30) Priority: 28.07.2014 NL 2013268
(43) Date of publication of application: 03.02.2016
(73) Proprietor: Profiltra B.V., 1332 BB Almere (NL)
(72) Inventor: Mulder, Albert Meindert, 1332 BB Almere (NL)
(74) Representative: Plaggenborg, Menko Bernard

(56) References cited:
- EP-A1- 0 486 299
- EP-A1- 0 900 964
- WO-A2-91/19127
- US-A- 5 058 341
- US-A1- 2011 210 222

## Description

The present invention relates to a method according to the preamble of claim 1.

Such a method and the compensator for use therewith are known in the art. Hereafter reference will be mainly made to the compensators whereas the method for using the compensator is meant as well. These known compensators are used for feeding conduits sealingly through an opening in a wall. The compensator provides both for a fluid tight seal between both sides of the wall and for a compensating means such that the conduit is able to move with respect to the wall. The compensator on the one hand has a first, relatively small diameter so as to enable one to feed said same through the wall and on the other hand has a second, relatively larger diameter for positioning same against the wall around said opening. For example, a fixed pipe may be provided in the opening in the wall that actually provides for the opening through the wall. The conduit then will be fed through said pipe, and wherein the compensator at its second diameter is connected to said pipe.

Known compensators and the method for coupling a conduit and a wall of a tank pit by means of the compensator provide for a clamping connection within said opening. To that end, a flexible material is positioned between the conduit and the circumference of the opening. The flexibility of such material provides for a limited movability of the conduit with respect to the wall, wherein said movability is limited due to the fact that such flexible material also has to provide for a fluid tight seal between the conduit and the wall. Only with much effort said material can be placed sealingly between conduit and wall, especially where this should be done *in situ* and the conduit already is fed through said wall. In practice, this known method often leads to insufficient movability, for example at temperature fluctuations in the surrounding or due to fluids inside said conduit.

There is no solution available for these problems.

The invention aims at providing an improved method of the kind mentioned in the preamble.

More in particular, the invention aims at providing a method that both provides an excellent seal and an excellent movability such that the conduit has a relatively large freedom of movement within said opening, especially with respect to the state of the art.

The invention also aims at providing an improved method that does not deteriorate with respect to its sealing properties, upon fire and the like, during a predetermined amount of time.

So as to obtain at least one of the goals, according to a first embodiment the present invention provides a method comprising the features of claim 1. This method has the advantage that the freedom of movement is much larger than is available in the state of the art. Furthermore, the freedom of movement is even much larger when the conduit is fed through the wall at an angle that is obliquely or slantwise, whereas still an excellent sealing is maintained. In the art, such slant conduits yielded sealing problems because the sealing material was not evenly distributed along between the wall and the conduit.

It has also shown that the invention may provide a more accurate positioning of said compensator around the conduit and against the wall than was possible in the art. Even at existing situations of a conduit through a wall, where a compensator is installed for providing a seal, it becomes possible to yield an optimal seal.

It is known in the art to provide fire collars for preventing fire to escape through a gap between a conduit and a wall. These fire collars are comprised of an intumescent material that expands when exposed to high temperature. So as to enable the conduit to be guided through the opening in the wall, the opening cannot be sealed fully as long as it has not been exposed to fire. Examples of documents describing such known fire collar are US2011/0210222, US 5058341, WO 91/019127, EP 0486299 and EP 0900964. An example of these known fire collars may comprise a coupling part that is connected to the wall on the one hand and to the conduit on the other hand, said coupling part being partially comprised of a flexible material. However, these known fire collars do not provide a freedom of movement to the conduit with respect to the wall. Neither do these fire collars provide a continuous seal between the conduit and the wall, as long as the intumescent material has not been exposed to fire.

US2011/0210222 relates to a firestop collar. The metal casing strip does not provide flexibility during normal operating conditions. Also, it provides no fluid tight seal during such normal operating conditions, i.e. in case there is no fire.

US 5058341 does not have overlapping pieces of material; it only has abutting pieces. As a consequence, it will not provide a fluid tight seal. Furthermore, the seal according to this US patent is not connected to the conduit; it is only positioned around the conduit. The only movability is an axial displacement of the conduit with respect to the collar and the wall. There is no flexible connection, which renders this seal unsuitable for use as a compensator in a tank pit wall, which requires a flexible connection in other directions as well.

WO 91/019127 relates to a firestop collar that has openings in a pipe such that fire will easily reach intumescent material inside said pipe. As a consequence, this seal is not fluid tight under normal operation conditions. The pipe is made of a plastic material. A skilled person would never consider to apply a construction with a plastic pipe in a tank pit wall.

EP 0486299 only has abutting pieces, no overlapping pieces of flexible material. As a consequence, it will not be able to provide a fluid tight seal under normal operating conditions. Furthermore, the collar material according to this publication is not connected to but only positioned around the conduit. Since the collar itself is made from a rigid and stiff material it will not provide flexibility as required in compensators used in tank pit walls. By bending the said collar in a tubular shape, its flexibility (if present at all) is even more reduced.

It is especially preferred that said coupling part is comprised of a sheet material that is positioned sealingly at least around said conduit. This ensures a sealed coupling at the circumference of said conduit such that fluid will not drain between said conduit and said wall.

So as to be able to position said coupling part easily around said conduit, it is preferred that said coupling part comprises a sheet material to be wrapped around said conduit. The sheet material may be wrapped *in situ* around said conduit and connected thereto, after which the part of said sheet material at a position away from said conduit can be locked to the wall.

It is preferred that said compensator comprises a clamping strip for locking said coupling part around said conduit, for enabling one to connect said coupling part to said conduit. Such may be a common hose clamp or the like. Said clamping s preferably obtained such that nu fluid may drain between said conduit and said coupling part. Said coupling part's other end, for example said sheet material, may be connected to said wall, such that no fluid may drain between said coupling part and said wall.

Advantageously, the opening in said wall may be provided with a fixed pipe, said pipe connecting with its outside in a fluid tight manner to said wall. The conduit can, inside said pipe, be fed through said wall. Such embodiment provides the advantage that said coupling part can be easily connected to said pipe. For example, said coupling part can be locked to said pipe by means of a clamping strip, such that a fluid tight connection between said pipe and said coupling part is obtained.

In case of a fire, the compensator may become damaged. So as to maintain a fluid tight seal in case of fire, an intumescent material is positioned between said conduit and said wall. When part of said compensator is damaged, such that it provides no fluid tight seal any longer, said intumescent material will provide a sufficient flame retardancy; then, security forces may continue their services.

An excellent seal is obtained when said coupling part comprises a layered material with at least a flexible material and a constructive force providing material, said constructive force providing material preferably being positioned between two layers of flexible material. Such provides freedom of movement to said conduit as well as an adequate fluid tight seal.

A proper resistance against many fluids is obtained when said flexible material is chosen from at least one of a silicone rubber and fluoroelastomer.

An embodiment providing both a high strength and safety is obtained when said constructive force providing material comprises a layer of woven polymer fiber, steel fiber or glass fiber, preferably a layer of woven polyethylene fiber or aramid fiber.

Accordingly, the present invention also relates to a method for sealingly and with freedom of movement coupling a wall of a tank pit with a conduit to be fed trough said wall by means of a coupling part according to the invention, comprising measuring a diameter of an opening in said wall and of said conduit, measuring the angle of intersection of said conduit with respect to said opening, measuring the mutual position of said conduit and said opening in said wall and, based on the measured values, manufacturing a coupling part to be connected to said wall and to said conduit, and sealingly connecting said coupling part to said opening and to said conduit.

In this embodiment of the method according to the invention, it is preferred for said coupling part to be a sheet material and wherein the method comprises the step of manufacturing said sheet material for at least wrapping said conduit. This ensures that said coupling part can easily be wrapped around a conduit *in situ,* and that said conduit does not need to be disconnected for positioning said compensator around same. Such speeds up installation of said compensator.

A sealing method for easily and quickly providing a seal is obtained when the sheet material is at least partially wrapped around itself and positioned around said conduit. The overlapping portion that is positioned between the conduit and the wall can be mutually connected so as to obtain a fluid tight connection.

The overlapping parts of the sheet material may be mutually connected by means of an adhesive.

A quick sealing of said coupling part around said conduit is obtained when said coupling part is locked around said conduit by means of clamping strips.

A quick positioning to the wall is obtained when the opening in said wall comprises a pipe, preferably a tubular pipe, for connecting thereto said coupling part. Then, said coupling part can be connected to said pipe in a similar fashion as in a case where it is connected to said conduit.

Hereafter, the invention will be described by way of a drawing. The drawing shows in:
Fig. 1 a schematic perspective view of the use of a compensator according to the invention,
Fig. 2 a partial sectional front view of a compensator according to the invention, and
Fig. 3 a partial sectional side view of a compensator according to the invention.

In the figures, the same parts are denoted by the same reference numerals. However, for ease of understanding the figure and simplicity, not all parts that are required for a practical embodiment, are shown in the figures.

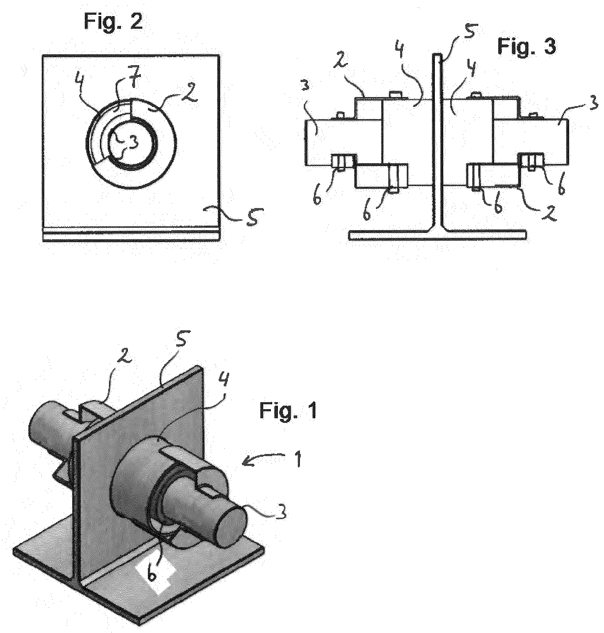

Fig. 1 shows a schematic perspective view of the use of a compensator 1 according to the invention. The compensator 1 comprises a coupling part 2 that, in the embodiment shown, in which it is positioned around a conduit 3 and a pipe 4 and against a wall 5, has a shape such that it seals the conduit 3 all around. Furthermore, said coupling part is connected sealingly against pipe 4. In this embodiment, pipe 5 is provided at an opening in said wall 5, such that pipe 4 actually defines the opening in said wall. Conduit 3 is fed through said opening in said wall 5 and, as a consequence, through said pipe 4.

By way of the sealing connection of coupling part 2 with both the conduit 3 and pipe 4, fluid cannot drain from a first side of said wall 5 to another side of said wall 5.

Around said conduit 3, at a position within the pipe 4, an intumescent material is provided that bulges upon contact with high temperatures, like with flames, and thus provides a flame retardancy between conduit 3 and pipe 4. In that case, damage of said coupling part due to fire will not lead to a through opening in said wall 5.

Said coupling part 2 may be locked around conduit 3 and pipe 4 by means of a clamping strip 6 so as to mutually connect these in a fluid tight manner, as shown in Fig. 3 in which a partial sectional view of an application of a compensator according to the invention is shown.

Fig. 2 is a partial sectional front view of a compensator according to the invention. Conduit 3 and pipe 4 are both shown in partial sectional view, as well as coupling part 2. The opening 7 in said wall, being defined by the pipe 4, is visible as well in this Figure 2.

In the figures, an embodiment is shown wherein conduit 3 runs substantially parallel to pipe 4. Conduit 3, however, may run obliquely or slantwise with respect to said pipe 4. Said coupling part 2 may be easily adapted to such situation by measuring the position and gradient of said conduit 3 within said opening 7 of said pipe and applying these measurements for manufacturing a coupling part that is especially adapted to the actual situation. This yields an excellent fitting of said coupling part to said conduit and pipe. By carrying out the coupling part as a winding form, said coupling part can be connected to an existing conduit without the need to disconnect said conduit.

The invention is not limited to the embodiments as described above and as shown in the drawing. For example, the coupling part may be connected directly to the wall. Although reference was given predominantly to connecting the coupling part to a pipe, it is to be understood that the coupling part may be connected directly to the wall. The invention is limited by the appending claims only.

## Claims

1. A method for sealingly and with freedom of movement coupling a wall (5) of a tank pit and a conduit (3) to be fed through said wall (5) by means of a compensator (1), said compensator (1) comprising a coupling part (2) that is connected to the conduit (3), said coupling part (2) is comprised of a sheet material (2), partially comprised of a flexible material, **characterized in that** the method comprises the steps of flexibly connecting the coupling part (2) to the wall (5) of the tank pit on the one hand and to the conduit (3) on the other, sealingly wrapping said coupling part (2) around at least said conduit (3).

2. A method according to claim 1, comprising the step of positioning an intumescent material between said conduit (3) and said wall (5) .

3. A method according to any of the preceding claims, comprising the step of positioning a clamping strip (6) for locking said coupling part (2) around said conduit (3).

4. A method according to any of the preceding claims, comprising the step of using a coupling part (2) comprising a layered material of at least a flexible material and a structural strength providing material, preferably a structural strength providing material that is positioned between two layers of flexible material.

5. A method according to any of the preceding claims, applying a flexible material chosen from at least one of silicone rubber and fluoroelastomer.

6. A method according to any of the preceding claims, applying a constructive strength providing material comprising a layer of woven polymer fiber, steel fiber or glass fiber, preferably a layer of woven polyethylene fiber or aramid fiber.

7. A method according to claim 1 for sealingly and with freedom of movement coupling a wall (5) of a tank pit with a conduit to be fed trough said wall (5) by means of a coupling part (2) according to any of the preceding claims, comprising measuring a diameter of an opening in said wall (5) and of said conduit (3), measuring the angle of intersection of said conduit (3) with respect to said opening, measuring the mutual position of said conduit (3) and said opening in said wall (5) and, based on the measured values, manufacturing a coupling part (2) to be connected to said wall (5) and to said conduit (3), and sealingly connecting said coupling part (2) to the wall around said opening and to said conduit (3).

8. A method according to claim 7, wherein said coupling part (2) is a sheet material (2) and wherein said method comprises the step of manufacturing said sheet material (2) for at least wrapping said conduit (3).

9. A method according to any of claims 7 and 8, wherein said sheet material (2) is at least partially wrapped around itself and positioned around said conduit (3).

10. A method according to any of claims 7 - 9, wherein said coupling part (2) is locked around said conduit (3) by means of clamping strips (6).

11. A method according to any of claims 7 - 10, wherein said opening in said wall (5) comprises a pipe (4), preferably a tubular pipe (4), for connecting thereto said coupling part (2).

12. A method according to claim 9, wherein overlapping portions of said sheet material (2) are connected mutually, for example by means of an adhesive.

## Patentansprüche

1. Verfahren zum dichtenden Koppeln einer Wand (5) eines Tankbehälters mit einer Rohrleitung (3) mit Bewegungsfreiheit, um mittels eines Kompensators (1) durch die Wand (5) befüllt zu werden, worin der Kompensator (1) ein Kupplungsteil (2) umfasst, welches mit der Rohrleitung (3) verbunden ist, worin das Kupplungsteil (2) ein Blattmaterial (2) umfasst, das teilweise ein flexibles Material umfasst,
**dadurch gekennzeichnet, dass** das Verfahren die Schritte umfasst,
flexibles Verbinden des Kupplungsteils (2) mit der Wand (5) des Tankbehälters einerseits und mit der Rohrleitung (3) andererseits, und dichtend Umhüllen der mindestens einen Rohrleitung (3) durch das Kupplungsteil (2).

2. Verfahren nach Anspruch 1, welches den Schritt umfasst,
Anordnen eines quellenden Materials zwischen der Rohrleitung (3) und der Wand (5).

3. Verfahren nach einem der vorstehenden Ansprüche, welches den Schritt umfasst,
Anordnen einer Klemmleiste (6) zum Verriegeln des Kupplungsteils (2) um die Rohrleitung (3).

4. Verfahren nach einem der vorstehenden Ansprüche, welches den Schritt umfasst, Verwenden eines Kupplungsteils (2), das ein geschichtetes Material aus mindestens einem flexiblen Material und einem Struktur-festigenden Material, vorzugsweise einem zwischen zwei Schichten von flexiblem Material angeordneten Struktur-festigenden Material, umfasst.

5. Verfahren nach einem der vorstehenden Ansprüche, wobei ein flexibles Material verwendet wird ausgewählt unter mindestens einem von Silikongummi und Fluorelastomer.

6. Verfahren nach einem der vorstehenden Ansprüche, wobei ein Struktur-festigendes Material verwendet wird, das eine Schicht gewobener Polymerfasern, Stahlfasern oder Glasfasern umfasst, vorzugsweise eine Schicht gewobener Polyethylenfasern oder Aramidfasern.

7. Verfahren nach Anspruch 1 zum dichtenden Koppeln einer Wand (5) eines Tankbehälters und einer Rohrleitung (3) mit Bewegungsfreiheit, mittels eines Kupplungsteils (2) nach einem der vorstehenden Ansprüche, welches umfasst,
Erfassen eines Durchmessers einer Öffnung in der Wand (5) und der Rohrleitung (3),
Erfassen des Winkels der Kreuzung der Rohrleitung (3) mit der Öffnung,
Erfassen der gemeinsamen Position der Rohrleitung (3) und der Öffnung in der Wand (5) und,
Herstellen eines Kupplungsteils (2) bezogen auf die erfassten Werte, zum Verbinden mit der Wand (5) und der Rohrleitung (3),
und dichtendes Verbinden des Kupplungsteils (2) um die Öffnung mit der Wand und mit der Rohrleitung (3).

8. Verfahren nach Anspruch 7, worin das Kupplungsteil (2) ein Blattmaterial (2) ist und wobei das Verfahren die Schritte umfasst, Herstellen des Blattmaterials (2) zum Umhüllen mindestens der Rohrleitung (3).

9. Verfahren gemäß einem der Ansprüche 7 und 8, wobei das Blattmaterial (2) mindestens teilweise um sich selbst gehüllt und um die Rohrleitung (3) angeordnet wird.

10. Verfahren gemäß einem der Ansprüche 7 - 9, wobei das Kupplungsteil (2) mittels Klemmleisten (6) um die Rohrleitung (3) verriegelt wird.

11. Verfahren gemäß einem der Ansprüche 7 - 10, worin die Öffnung in der Wand (5) eine Leitung (4) umfasst, vorzugsweise eine röhrenförmige Leitung (4), um das Kupplungsteil (2) damit zu verbinden.

12. Verfahren nach Anspruch 9, wobei überlappende Bereiche des Blattmaterials (2) wechselseitig verbunden werden, beispielsweise mittels eines Klebstoffes.

## Revendications

1. Procédé pour accoupler, de manière étanche et avec une liberté de mouvement, une paroi (5) d'une cuve de réservoir et un conduit (3) à acheminer à travers ladite paroi (5) au moyen d'un compensateur (1), ledit compensateur (1) comprenant une partie d'accouplement (2) qui est reliée au conduit (3), ladite partie d'accouplement (2) étant constituée d'un matériau en feuille (2), partiellement constitué d'un matériau flexible, **caractérisé par le fait que** le procédé comprend les étapes consistant à relier de manière flexible la partie d'accouplement (2) à la paroi (5) de la cuve de réservoir, d'une part, et au conduit (3), d'autre part, à envelopper de manière étanche ladite partie d'accouplement (2) au moins autour dudit conduit (3).

2. Procédé selon la revendication 1, comprenant l'étape consistant à positionner un matériau intumescent entre ledit conduit (3) et ladite paroi (5).

3. Procédé selon l'une quelconque des revendications précédentes, comprenant l'étape consistant à positionner une bande de serrage (6) pour verrouiller ladite partie d'accouplement (2) autour dudit conduit (3).

4. Procédé selon l'une quelconque des revendications précédentes, comprenant l'étape consistant à utiliser une partie d'accouplement (2) comprenant un matériau stratifié au moins d'un matériau flexible et d'un matériau fournissant une résistance structurelle, de préférence un matériau fournissant une résistance structurelle qui est positionné entre deux couches de matériau flexible.

5. Procédé selon l'une quelconque des revendications précédentes, comprenant appliquer un matériau flexible choisi parmi au moins un le caoutchouc de silicone et le fluoroélastomère.

6. Procédé selon l'une quelconque des revendications précédentes, comprenant appliquer un matériau fournissant une résistance constructive comprenant une couche de fibre de polymère, fibre d'acier ou fibre de verre, tissée, de préférence une couche de fibre de polyéthylène ou fibre d'aramide, tissée.

7. Procédé selon la revendication 1 pour accoupler, de manière étanche et avec une liberté de mouvement, une paroi (5) d'une cuve de réservoir et un conduit à acheminer à travers ladite paroi (5) au moyen d'une partie d'accouplement (2) selon l'une quelconque des revendications précédentes, comprenant mesurer un diamètre d'une ouverture dans ladite paroi (5) et dudit conduit (3), mesurer l'angle d'intersection dudit conduit (3) par rapport à ladite ouverture, mesurer la position mutuelle dudit conduit (3) et de ladite ouverture dans ladite paroi (5) et, sur la base des valeurs mesurées, fabriquer une partie d'accouplement (2) à relier à ladite paroi (5) et audit conduit (3), et relier de manière étanche ladite partie d'accouplement (2) à la paroi autour de ladite ouverture et audit conduit (3).

8. Procédé selon la revendication 7, dans lequel ladite partie d'accouplement (2) est un matériau en feuille (2) et ledit procédé comprend l'étape consistant à fabriquer ledit matériau en feuille (2) au moins pour envelopper ledit conduit (3).

9. Procédé selon l'une quelconque des revendications 7 et 8, dans lequel ledit matériau en feuille (2) est au moins partiellement enveloppé autour de lui-même et positionné autour dudit conduit (3).

10. Procédé selon l'une quelconque des revendications 7 à 9, dans lequel ladite partie d'accouplement (2) est verrouillée autour dudit conduit (3) au moyen de bandes de serrage (6).

11. Procédé selon l'une quelconque des revendications 7 à 10, dans lequel ladite ouverture dans ladite paroi (5) comprend un tuyau (4), de préférence un tuyau tubulaire (4), pour relier à celui-ci ladite partie d'accouplement (2).

12. Procédé selon la revendication 9, dans lequel des parties en chevauchement dudit matériau en feuille (2) sont mutuellement reliées, par exemple au moyen d'un adhésif.
